**Europäisches Patentamt**

**European Patent Office**

**Office européen des brevets**

(19)

(11)   **EP 1 267 143 A1**

(12)   **EUROPEAN PATENT APPLICATION**

(43) Date of publication:
**18.12.2002  Bulletin 2002/51**

(51) Int Cl.⁷: **G01B 11/00**, G01B 11/04, G01B 11/10, G01B 11/24

(21) Application number: **01401570.5**

(22) Date of filing: **15.06.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **European Community (EC)**<br>**2920 Luxembourg (LU)** | (72) Inventor: **Magonette, Georges**<br>**21018 Osmate (IT)**<br><br>(74) Representative: **Joly, Jean-Jacques**<br>**Cabinet Beau de Loménie**<br>**158, rue de l'Université**<br>**75340 Paris Cédex 07 (FR)** |

(54)   **Method and apparatus for optical position measurement**

(57)    The apparatus for optically measuring the position of a moving object (101) comprises a scintillating fibre (102) disposed relatively to a laser light scanning means comprised of a static laser source (111) and a rotating polygon mirror (110) which continuously lighten with a laser light beam (115) the length of the fibre. The scintillating fibre (102) comprises at least one photo detector (131) for detecting at one end of the fibre an occultation of the laser light beam (115) by the object, the apparatus further comprising processing means for outputting a position value (P) of the object (101).

FIG.2

EP 1 267 143 A1

**Description**

FIELD OF THE INVENTION

The present invention relates to a method and an apparatus for optically detecting the position and/or the form of an object. In particular, the present invention relates to non contact measurement instruments for sensing object movements occurring transverse to them.

BACKGROUND OF THE INVENTION

Most known non-contact measurement instruments designed to sense transverse motions are based on optical methods and use line scan camera. Optical position detectors include either charge-coupled device (CCD) arrays or position-sensitive photocells (lateral effect or photo-potentiometer).

In the devices using CCD arrays, the object to be measured is back-lighted so as to produce a light-dark pattern with transitions at the object's edges. For measurement purpose, a good focusing is often a problem. An increase in resolution, i.e. of the number of pixels, inevitably involves a high cost. Moreover, if the object is moving, which is often the case in process controls for example, additional errors are introduced and a higher scan frequency leads in turn to a higher cost for the measurement system.

With devices including position-sensitive photocells, the lateral-effect photodiode is the basis of a number of motion-measuring schemes. They have a short response time and may be necessary in the highest-speed applications. Unfortunately, they have a low resolution and are subject to drift.

These two types of detectors need magnifying optics and sophisticated electronics for signal processing which render their manufacturing cost relatively expensive.

OBJECT AND SUMMARY OF THE INVENTION

In view of such aspects, an object of the present invention is to provide a method and an apparatus in which the above-mentioned problems can be solved. In other words, an object is to provide a method and an apparatus which allow, at a low cost, non-contact position measurement of a object with a good resolution even in the case where the object is moving.

To this end, there is provided a method for optical position measurement of an object, characterised in comprising the steps of providing at least one scintillating fibre comprising a core incorporating fluorescent dyes, placing a laser light scanning source at a predetermined distance from the scintillating fibre so that a laser light beam is scanned over the fibre length in one scanning sequence, detecting an occultation of the light beam in the scintillating fibre during one scanning sequence, and calculating a position of the object from the occultation detected.

Thus, according to the present invention, the position of an object may be measured in a reliable and accurate fashion without requiring a contact with the object while using low cost component in comparison with the non-contact measurement devices of the prior art.

According to an aspect of the invention, the detection of the occultation in the fibre is performed from one or both end(s) of the scintillating optical fibre.

Preferably, the scanning sequence further comprises the steps of detecting a first optical signal indicating that the scanning sequence is started and a second optical signal indicating that the scanning sequence on the scintillating fibre is finished.

The object may move along a line between the scanning laser light source and the scintillating fibre.

More specifically, the position value of the object is calculated from the following equation:

$$P = d \sin\left[\alpha\left(\frac{1}{2} - \frac{T_{13}}{T_{12}}\right)\right]$$

where

d is the distance between the emitting point of the laser light beam and the object,
$\alpha$ is the angle covered by the laser light beam in a scanning sequence,
$T_{12}$ is the time measured for a scanning sequence, and
$T_{13}$ is the time between the starting of a scanning sequence
and the detection of the occultation in the scintillating fibre.

The present invention also provides an apparatus for optical position measurement of an object, characterized in that it comprises at least one first scintillating fibre disposed relatively to first laser light scanning means so as to be continuously illuminated by a laser light beam deflected from the first laser scanning means, the first scintillating fibre comprising at least one photo detecting means for detecting at one end of the fibre an occultation of the laser light beam by the object and in that the apparatus further comprises processing means for outputting a position value of the object.

Accordingly, the present apparatus produces a laser light beam which is scanned over the length of a scintillating fibre which is used as a receiver for detecting laser light interruption. This provides a non-contact measurement system of an object which is simple in construction and thus having a low cost of manufacturing.

According to another embodiment of the present invention, the apparatus further comprises a second scintillating fibre which is disposed orthogonal to the first fibre and relatively to second laser scanning means so as to be continuously illuminated by a laser light beam deflected from the second laser scanning means.

According to an aspect of the invention, the scintillating fibres, used in the apparatus, comprise a further photo detecting means for detecting an occultation of the laser light beam at both ends of the fibre.

According to another aspect of the invention, the scintillating fibres further comprise a first photo sensor disposed in the vicinity of an end of the fibre and a second photo sensor disposed in the vicinity of the other end of the fibre.

More specifically, the laser light scanning means each comprises a low power laser source and a rotating polygon mirror and the low power source emits a laser beam at a wavelength of 670 nm or less.

According to another embodiment, the laser light scanning means further comprises F-theta lenses for converting the angular velocity of the laser light beam to a linear velocity.

On the other hand, the object moves along a line between the laser light scanning means and the scintillating fibre.

BRIEF DESCRIPTION OF THE DRAWINGS

The invention and its advantages will be better understood from the following description, given as non-limiting examples, of preferred embodiments with reference to the appended drawings, in which:

figure 1 is a schematic cross-sectional view of a scintillating fibre according to the invention;
figure 2 is schematic view of a position measurement apparatus according to a first embodiment of the invention;
figure 3 is a timing chart of a scanning sequence according to the present invention;
figure 4 is functional block diagram of the signal processing means of the invention; and
figure 5 is schematic view of a position measurement apparatus according to a second embodiment of the invention.

DESCRIPTION OF THE PREFERRED EMBODIMENTS

The optical position measurement apparatus of the present invention notably uses at least one scintillating optic fibre as a receiver. The scintillating optic fibres are also called wavelength-shifting optical fibres or fluorescent plastic fibres.

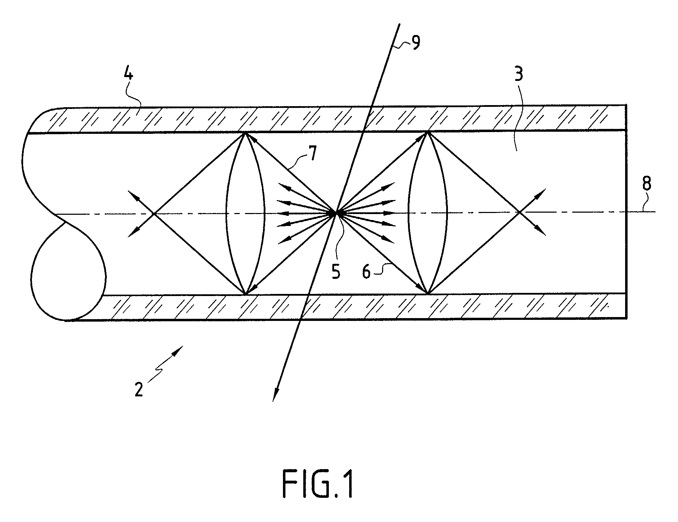

The structure and effects of the scintillating fibres used in the apparatus of the invention are described in relation with figure 1. A scintillating fibre 2 is comprised of a plastic core 3 which is clad with a material 4. The plastic core 3 of the scintillating fibre is doped with chemicals so that the core comprises fluorescent dyes which have the property of absorbing an incident light and re-emitting the light at a longer wavelength.

Therefore, when a light beam 9 passes through the scintillating fibre 2, the plastic core 3 absorbs part of the external light. The light is absorbed by a fluorescent dye 5 which re-emits this light, at a longer wavelength, through two light waves 6 and 7 respectively on either side of the fibre. The re-emitted light waves 6, 7 remain trapped in the plastic core 3 by total internal reflection. The total internal reflection is obtained with the cladding material 4 which presents a lower refractive index than the core, thus creating a mismatch of indices which set the conditions for total internal reflection.

The re-emitted light wave is propagated along, by internal reflection, until it arrives at one end of the fibre. At this point, the light escaping from the fibre can be detected by a photo detector.

The above properties of the scintillating fibre are used in the apparatus of the present invention.

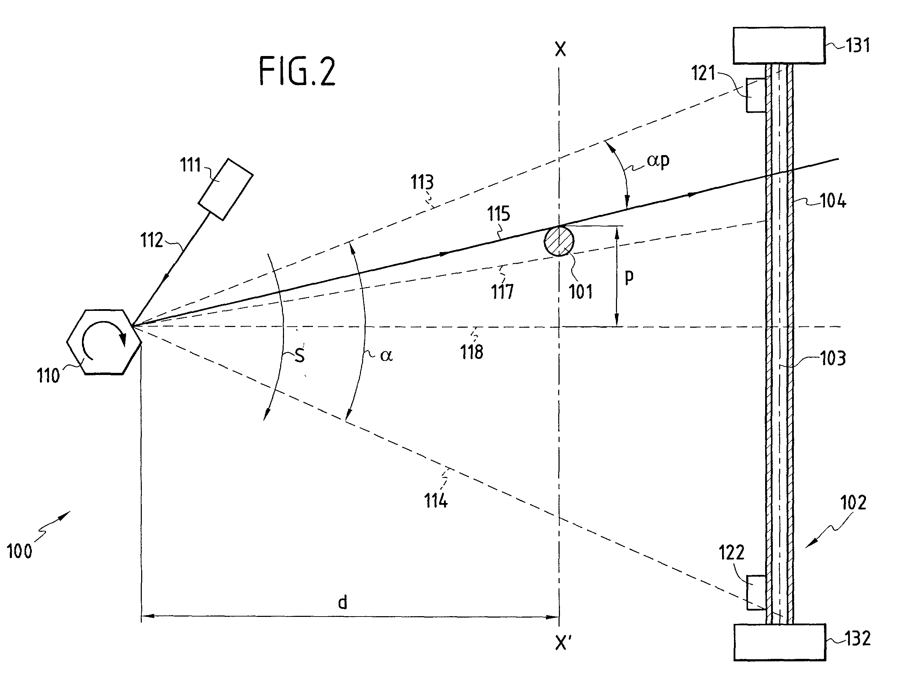

The method and apparatus for optical position measurement of an object according to the present invention will be described in relation with a first embodiment illustrated in figure 2. The apparatus 100 comprises a scintillating fibre 102 having the properties described above. In other words, the fibre 102 includes a core 103 incorporating fluorescent dyes and being clad by a material 104 presenting a refractive index lower than that of the core 103. The two ends of the fibre 102 are provided respectively with a photo detector 131 and 132 for detecting the light waves escaping from the fibre. The fibre 102 could be also provided with only one photo detector located at one end of the fibre. The advantage of providing a photo detector at each end of the fibre is to provide two points at which the re-emitted light wave can be detected. As viewed from figure 1, the fluorescent dye 5 re-emits a light wave towards the two ends of the fibre. The losses all along a fibre length are greater in a scintillating fibre than in a classical optical fibre. Hence, providing a photo detector at both ends of the scintillating fibre allows the side of the fibre where the light wave has the shorter way to go, and so the highest magnitude to be chosen.

Further, two phototransistors 121 and 122 are respectively placed close to the ends of the fibre. The apparatus also comprises a laser scanning source assembly including a low power laser source 111, such as a laser diode, which emits a low power laser beam 112 towards the surface of a rotating polygon mirror 110. The laser beam 112 emitted from the laser emitting source is thus reflected by the polygon mirror 110 which deflects the laser beam along a line S and, in the process, transforms the beam from a static source of light into a beam rotating in a plane at a constant speed defined by the mirror rotation speed and the number of its faces. More specifically, in order to scan the entire length of fibre 102, the static laser beam 112 has to be deflected over at least an angle $\beta$ between the light beams 113 and 114. The means for deflecting the static laser beam 112 is not limited to a rotating polygon mirror, it may be also comprised of a vibrating mirror or an acousto-optical cell of the Bragg cell type in which an acoustic wave forms a grating without mechanical movement.

In order to excite the fluorescent dyes of the core 103, the photons of the incident light must have a sufficient level of energy, that is a short wavelength. Therefore, a laser emitting a light at 670 nm or shorter is quite suitable.

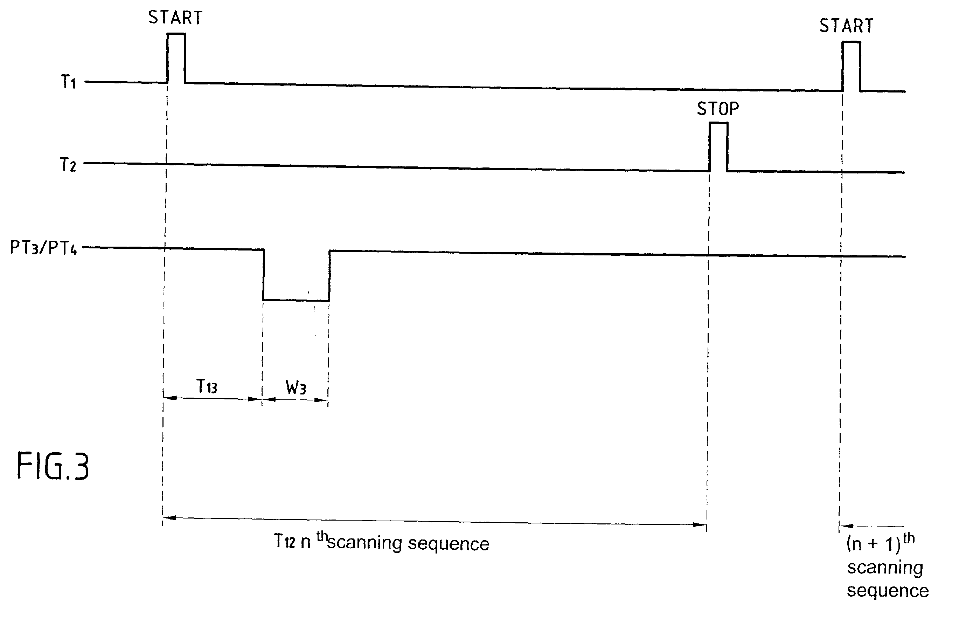

The apparatus 100 thus constituted provides a one-dimensional (1-D) measurement system. The fibre 102 is fixed in the rotation plan of the laser beam and is continuously illuminated during the scanning sequence if no object occults the laser beam. When referring to figure 3, the signals $T_1$ and $T_2$ are the signals outputted by the phototransistors 121 and 122 respectively. A $n^{th}$ scanning sequence starts when the light beam hits the phototransistor 121 and stops when the beam hits the phototransistor 122. In other words, the phototransistor 121 outputs a start pulse when it is hit by a light beam and the phototransistor 122 outputs a stop pulse when it is hit by a light beam. Accordingly a scanning sequence in which the entire length of the fibre is illuminated once is comprised between two adjacent start and stop pulse.

As illustrated on figure 2, the laser scanning source assembly, composed of the low power laser source 111 with the rotating polygon mirror 110, and the receiver formed by the scintillating fibre together with photo detectors are disposed in such a way that they define a plan comprising a line XX' along which an object 101 moves, as on an assembly or production line. More precisely, the polygon mirror is placed such that the laser light beam is emitted at a predetermined distance d from the line XX' while the scintillating fibre is placed on the other side of the line XX' relatively to the plan of the scan.

If the object 101 moves along the line XX' and in the plan defined by the scanning of the laser beam, it occults the laser beam 115 during a scanning sequence so that the photo detectors 131 and 132 sense a light interruption at the end of the fibre. In this case, as shown in figure 2, with a fibre having a photo detector at each end, the photo detector 131, rather than the photo detector 132, is preferred for sensing light interruption. Indeed, as can be seen from the figure, the laser light beam 115 is interrupted in a portion of the fibre which is nearer to the photo detector 131 than 132. At this time, the signal $PT_3/PT_4$, read from one of the photo detectors, changes from a high level, which is maintained as long as the laser beam is not interrupted, to a low level indicating that the laser beam is occulted by an object. The low level pulse outputted by the photo detectors corresponds to the interruption of the light wave re-emitted in the fibre, thus making the electrical signal outputted by the photo detector a low level. The width $W_3$ of the low level pulse corresponds to the duration of the occultation, that is the width of the object occulting the beam when the light is scanned at a constant speed.

The photo detector thus generates a low level pulse whose temporal position, relating to the start and stop pulses of a scanning sequence, depends on the position of the object. Starting from this statement, a basic relation for determining the position of the object can be established. With the laser beam rotating at a constant speed, the following relation is obtained:

$$\frac{\alpha_p}{\alpha} = \frac{T_{13}}{T_{12}} \Leftrightarrow \alpha_p = \alpha \frac{T_{13}}{T_{12}} \tag{1}$$

where:

$\alpha$ is constant,
$T_{13}$ represents the time between a start pulse and a light interruption detected, and
$T_{12}$ represents the time of the scanning sequence,
$T_{13}$ and $T_{12}$ being measured at each scanning sequence.

Knowing $\alpha_P$, the object position P is given by:

$$P = d \sin\left(\frac{\alpha}{2} - \alpha_P\right)$$

or

$$P = d \sin\left(\frac{\alpha}{2} - \alpha \frac{T_{13}}{T_{12}}\right) \Leftrightarrow P = d \sin\left[\alpha\left(\frac{1}{2} - \frac{T_{13}}{T_{12}}\right)\right] \qquad (2)$$

where $\alpha$ is a constant term.

Therefore, since $\alpha$ and d are constant terms and $T_{13}$ and $T_{12}$ are measured at each scanning sequence, it is possible to know the position P of the moving object 101 from the equation (2).

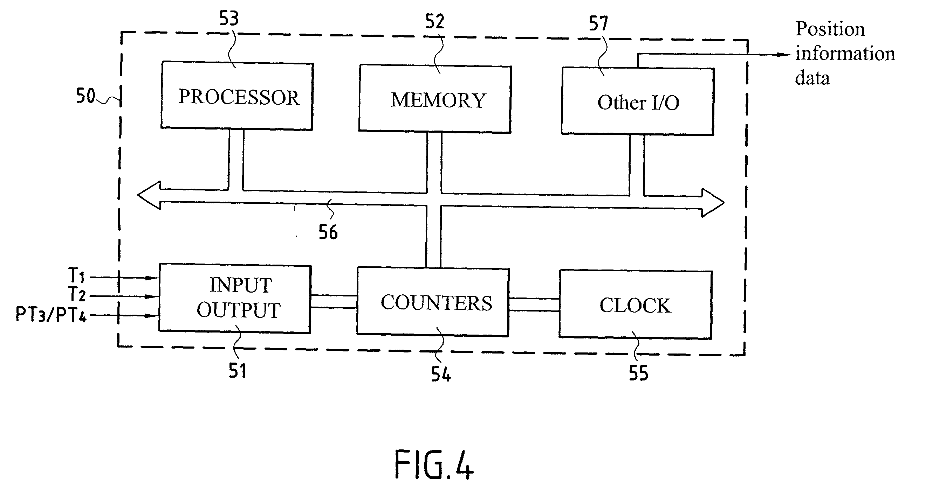

The above calculations are performed by processing means shown in figure 4. A processing unit 50 coupled to the apparatus 100 monitors a scanning operation through the impulse signal $T_1$ supplied by the conditioning amplifier (not shown) of the phototransistor 121, the impulse signal $T_2$ supplied by the conditioning amplifier (not shown) of the phototransistor 122 and through the impulse signals $PT_3/PT_4$ supplied by either the conditioning amplifiers of the photo detector 131 or 132. These signals are received at an input/output unit 51 that drives a counter unit 54 linked to a clock unit 55. At the end of each sampling cycle, the counting results are transmitted through a bus 56 to a processor 53 to perform the operations for generating position information data which are output from a second input/output unit 57. These operations (calculation programme) may be programmed and stored in a memory 52.

More specifically, when a start pulse is received at the input/output unit 51 from the signal $T_1$, the counter unit 54 starts to count clock pulses of the clock unit 55. When a low level pulse is detected from the signal $PT_3/PT_4$ before a stop pulse is received from the signal $T_2$, the number of the clock pulses already counted are stored as the temporal value $T_{13}$. Then, when a stop pulse is detected, the clock pulses counted from the start pulse are also stored as temporal value $T_{12}$. At this stage of the operation, the processing unit 50 is able to generate position information data, such as the above value P. The position information data can be either be stored as temporal value $T_{12}$. At this stage of the operation, the processing unit 50 is able to generate position information data, such as the above value P. The position information data can be either directly visualised on a display unit (not shown) or supplied to a system (not shown) which needs this information to control line-flow production processes.

An inverter can be provided in the signal line conveying the signal $PT_3/PT_4$ to the input/output unit 51. In this case, the interruption of the light in the fibre will be detected from a high level pulse, the signal $PT_3/PT_4$ remaining low as long as the fibre is illuminated.

Otherwise, if it is necessary to avoid the computation of the sinus in the formulation of the object position and thus reducing the computation time in the processing unit, a conversion table associating the ratio $\frac{T_{13}}{T_{12}}$ to the position of the object expressed in a physical unit such as millimetres, can be stored in the memory 52. Such a table, which is different for each specific value of d, can be computed by an external processing device, for example, a personal computer, and then downloaded on the memory of the processing 50. The position measurement apparatus of the invention provides a wide operating range which is typically from 0.1 m to 2 m, with a very high accuracy (up to 1/5000). However, it must be noted that for the measurement of ranges lower than 0.2 m, F-theta lenses or the like can be used to convert a constant angular velocity to one with a constant linear velocity. This avoids the computation of the sinus function of the equation (2) by the processing unit, thus maintaining the good response of the system.

The configuration of the processing means illustrated in figure 4 is given as an example of the manner in which the data supplied by the apparatus 100 in order to generate position data suitable for a user or another system. A man skilled in the art could obviously imagine various embodiments for the processing means without difficulty. For example, the processing means may be embodied from an integrated circuit specifically designed, such as an ASIC, for implementing the above steps.

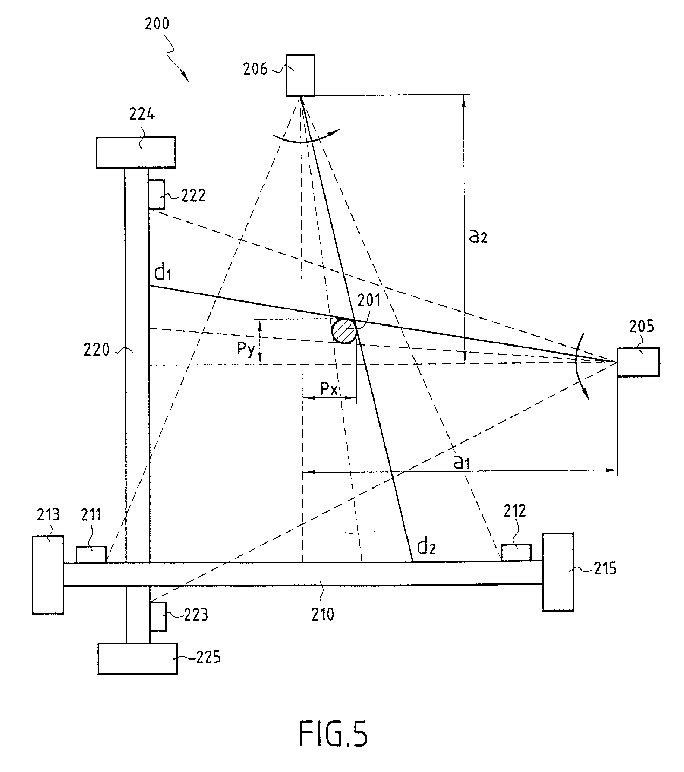

The apparatus 100 described above provides 1-D measurements but can also, by straightforward extensions, provide two-dimensional (2-D) measurements of a moving object. An example of a 2-D measurement apparatus is shown in figure 5. A first measurement device is formed by a laser scanning source 206 together with a scintillating fibre 210 equipped, as previously described, with two photo detectors 213, 215 and two phototransistors 211, 212, respectively provided at the end of the fibre. In the same way, a second measurement device, composed of a laser scanning source 205 combined with a scintillating fibre 220, is also provided with photo detectors 224, 225 and phototransistors 222, 223. This second measurement device is disposed substantially in the same plane as that defined by the first measurement device. In this embodiment the two scintillating fibres 210 and 220 are orthogonal to each other, thus providing a 2-D (X-Y) measurement of a moving object 201.

As can be seen from the layout of figure 5, the X Y position of the object 201 is defined by the intersection of the half lines $d_1$ and $d_2$. $d_1$ is defined by the distance $a_1$, which is known as the value d of the previous example, and Px which is measured as described above for the position value P. In the same manner, $d_2$ is defined by the distance $a_2$ (known) and Py (measured). Therefore, the X-Y coordinates are obtained by solving the two following equations:

$$\frac{x}{a_1} + \frac{y}{Px} = 1 \tag{3}$$

$$\frac{x}{a_2} + \frac{y}{Py} = 1 \tag{4}$$

For computing such equations the processing means shown in figure 5 have to be modified accordingly. In particular, the number of input terminals of the input/output unit has to be doubled and the program for processing data received from the detectors has to be modified in relation to the equations (3) and (4).

The optical position measurement apparatus according to the invention is simple, robust and reliable. It does not need magnifying optics or sophisticated electronics and can be produced at low cost. It could substitute CCDs or equivalent devices at a much lower cost in many applications comprising: measurement systems, object monitoring in line-flow production such as selection, inspection and profiling applications. The present method of the invention could also used for object recognition where the measured object "signature" can be compared with a "standard" to check whether they match in order to identify the object or even detect defects on it. In view of this, a 1-D measurement apparatus may further comprise, instead of a single fibre for one dimension, an array comprised of parallel scintillating fibres enabling to perform contour measurements of an object in one direction. In such a case, the laser scanning source assembly has to be adapted for illuminating more than one scintillating fibre.

A similar recognition could also be performed by moving the object at constant speed (as is the case in production lines) in front of a single fiber. In the latter case, a 2-D recognition could be performed.

Moreover, the apparatus can be employed in security systems for object detection or as a safety light barrier...

The apparatus and method according to the present invention are free of focalisation problems and of long-term drift. The sampling frequency is typically around 1000 scan/s but can be increased to higher values. Therefore, the method disclosed in the present invention is well suited to be employed in systems for dynamic measurements such as vibration measurements. As an example, the present method and apparatus can be implemented as smart cable sensors so as to monitor vibrations on civil structures for upgrading the structural damping and mitigating the induced vibrations. Without any sensor on a cable, the motions of this latter can be measured in a narrow range according to one or more dimensions.

The method of the invention may be used with any structure subjected to vibration, thus making the assembly as a smart structure.

## Claims

1.   Method for optical position measurement of an object (101), **characterised in** comprising the steps of:

> a) providing at least one scintillating fibre (102) comprising a core (103) incorporating fluorescent dyes (5),
> b) placing a laser light scanning source at a predetermined distance from the scintillating fibre so that a laser light beam (115) is scanned over the fibre length in one scanning sequence,
> c) detecting an occultation of the light beam in the scintillating fibre during one scanning sequence, and
> d) calculating a position (P) of the object (101) from the occultation detected.

2.   Method for optical position measurement according to claim 1, **characterised in that** said step c) is performed from at least an end of the scintillating optical fibre.

3.   Method for optical position measurement according to claim 1, **characterised in that** said step c) is performed from both ends of the scintillating optical fibre.

4.   Method for optical position measurement according to any one of claims 1 to 3, **characterised in that** the scanning sequence further comprises the steps of detecting a first optical signal ($T_1$) indicating that the scanning sequence is started and a second optical signal ($T_2$) indicating that the scanning sequence on the scintillating fibre is finished.

5. Method for optical position measurement according to any one of claims 1 to 4, **characterised in that** said object (101) moves along a line (XX') between the scanning laser light source and the at least one scintillating fibre.

6. Method for optical position measurement according to any one of claims 1 to 5, **characterised in that** said step d), the position value (P) of the object is calculated from the following equation:

$$P = d \sin \left[ \alpha \left( \frac{1}{2} - \frac{T_{13}}{T_{12}} \right) \right]$$

where d is the distance between the emitting point of the laser light beam and the object,
$\alpha$ is the angle covered by the laser light beam in a scanning sequence,
$T_{12}$ is the time measured for a scanning sequence, and
$T_{13}$ is the time between the starting of a scanning sequence
and the detection of the occultation in the scintillating fibre.

7. Apparatus for optical position measurement of an object (101), **characterized in that** said apparatus comprises at least one first scintillating fibre (102) disposed relatively to first laser light scanning means so as to be continuously illuminated by a laser light beam (115) deflected from the first laser scanning means, said at least one first scintillating fibre comprising at least one photo detecting means (131) for detecting at one end of the fibre an occultation of the laser light beam by the object and **in that** said apparatus further comprises processing means (50) for outputting a position value (P) of the object (101).

8. The apparatus according to claim 7, **characterised in** further comprising a second scintillating fibre (220) which is disposed orthogonal to the first fibre (210) and relatively to second laser scanning means (205) so as to be continuously illuminated by a laser light beam deflected from the second laser scanning means.

9. The apparatus according to claim 7 or 8, **characterised in that** said scintillating fibre(s) (102; 210, 220) comprises a further photo detecting means (132; 215, 225) for detecting an occultation of the laser light beam at both ends of the fibre.

10. The apparatus according to any one of claims 7 to 9, **characterised in that** said scintillating fibre(s) (102; 210, 220) further comprises a first photo sensor (121; 211, 222) disposed in the vicinity of an end of the fibre and a second photo sensor (122; 212, 223) disposed in the vicinity of the other end of the fibre.

11. The apparatus according to any one of claims 7 to 10, **characterised in that** said laser light scanning means comprises a low power laser source (111) and a rotating polygon mirror (110).

12. The apparatus according to claim 10, **characterised in that** said low power source emits a laser beam at a wavelength of 670 nm or less.

13. The apparatus according to any one of claims 7 to 12, **characterised in that** said laser light scanning means further comprises F-theta lenses for converting the angular velocity of the laser light beam (115) to a linear velocity.

14. The apparatus according to any one of claims 7 to 13, **characterised in that** said object (101) moves along a line (XX') between the laser light scanning means and the scintillating fibre.

FIG.1

FIG.2

EP 1 267 143 A1

START

START

T1

STOP

T2

PT3/PT4

T13    W3

FIG.3

T12 n th scanning sequence

(n + 1)th scanning sequence

EP 1 267 143 A1

**53**  **52**  **57**

Position
information
data

**50**

| PROCESSOR | MEMORY | Other I/O |

**56**

T₁
T₂
PT₃/PT₄

| INPUT OUTPUT | COUNTERS | CLOCK |

**51**  **54**  **55**

FIG.4

FIG.5

**European Patent Office**

**EUROPEAN SEARCH REPORT**

Application Number

EP 01 40 1570

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 070 237 A (IWAMA MASATOSHI ET AL) 3 December 1991 (1991-12-03) * the whole document * | 1-5,7, 9-14 | G01B11/00 G01B11/04 G01B11/10 G01B11/24 |
| Y | | 8 | |
| Y | EP 0 229 269 A (SIEMENS AG) 22 July 1987 (1987-07-22) * abstract; figure 1 * | 8 | |
| A | US 4 371 897 A (KRAMER CHARLES J) 1 February 1983 (1983-02-01) * abstract * * column 6, line 21 - column 6, line 39; figure 2 * | 1 | |
| A | PATENT ABSTRACTS OF JAPAN vol. 014, no. 465 (P-1114), 9 October 1990 (1990-10-09) & JP 02 184706 A (FURUKAWA ELECTRIC CO LTD:THE), 19 July 1990 (1990-07-19) * abstract * | 1-14 | |

TECHNICAL FIELDS SEARCHED (Int.Cl.7)

G01B

The present search report has been drawn up for all claims

| Place of search | Date of completion of the search | Examiner |
|---|---|---|
| MUNICH | 12 September 2001 | Beyfuß, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 267 143 A1**

| Patent document cited in search report | | Publication date | Patent family member(s) | | Publication date |
|---|---|---|---|---|---|
| US 5070237 | A | 03-12-1991 | JP | 2300603 A | 12-12-1990 |
| | | | JP | 2816702 B | 27-10-1998 |
| | | | JP | 2300604 A | 12-12-1990 |
| | | | JP | 2722247 B | 04-03-1998 |
| | | | JP | 2300649 A | 12-12-1990 |
| | | | JP | 2300650 A | 12-12-1990 |
| | | | DE | 4007401 A | 22-11-1990 |
| EP 0229269 | A | 22-07-1987 | DE | 3542896 A | 11-06-1987 |
| | | | AT | 71221 T | 15-01-1992 |
| | | | DE | 3683275 A | 13-02-1992 |
| US 4371897 | A | 01-02-1983 | CA | 1173491 A | 28-08-1984 |
| | | | DE | 3176915 D | 24-11-1988 |
| | | | EP | 0049048 A | 07-04-1982 |
| | | | IE | 52794 B | 02-03-1988 |
| | | | JP | 58070134 A | 26-04-1983 |
| JP 02184706 | A | 19-07-1990 | NONE | | |

EPO FORM P0459